# EUROPÄISCHE PATENTSCHRIFT

(11) **EP 0 739 148 B1**
(45) Veröffentlichungstag und Bekanntmachung des Hinweises auf die Patenterteilung: **30.05.2012**
(21) Anmeldenummer: 96105213.1
(22) Anmeldetag: 01.04.1996
(51) Int. Cl.: H04W 8/24

(54) **Systeme und Verfahren zur Fernprogrammierung von Mobilfunkstationen und Mobilfunkstation dafür**
Systems and method for remote programming of mobile radio stations and mobile radio station therefor
Réseaux et procédé de programmation à distance d'une station radio mobile et station radio mobile à cet effet

(30) Priorität: 21.04.1995 DE 19514716
(43) Veröffentlichungstag der Anmeldung: 23.10.1996
(73) Patentinhaber: SIEMENS AKTIENGESELLSCHAFT, 80333 München (DE)
(72) Erfinder: Hofmann, Ludwig, Dipl.-Ing., 85304 Ilmmünster (DE)

(56) Entgegenhaltungen:
- EP-A- 0 459 344
- EP-A- 0 510 322
- US-A- 5 400 389

## Beschreibung

Die Erfindung betrifft ein Mobilfunksystem mit einer Servicestation, die über zwischengeschaltete Vermittlungseinheiten mit mindestens einer mobilen Funkstation in Funkkontakt steht und mit dieser digitale Daten austauscht, wobei die mobile Funkstation zum Steuern der Datenkommunikation einen Mikroprozessor enthält, der auf einen ersten Speicherabschnitt zugreift, in dem ein von ihm abzuarbeitendes Steuerprogramm gespeichert ist. Ferner betrifft die Erfindung eine mobile Funkstation sowie ein Verfahren zum Betreiben des Mobilfunksystems.

Ein bekanntes Mobilfunksystem ist das digitale zellulare Mobilfunksystem D900 von Siemens, welches in einer Brochüre "Siemens D900 Mobilfunksystem", 1994, herausgegeben vom Geschäftszweig Mobilfunknetze, Hoffmanstraße 51, D-81539 München, Siemens Aktiengesellschaft, beschrieben ist. Ein solches Mobilfunkystem hat eine zentrale Servicestation, welche über zwischengeschaltete Vermittlungseinheiten, beispielsweise Basisstationen zum Versorgen zellenartiger Räume im Funknetz, mit einem Mobiltelefon digitale Daten austauscht. An das Mobiltelefon können weitere, digital arbeitende Endgeräte angeschlossen werden, beispielsweise Telefaxgeräte. Die Steuerung der Datenkommunikation auf Seiten des Mobiltelefons übernimmt ein Mikroprozessor, beispielsweise die Steuerung der Empfangs-, der Zeichengabe- und der Sendeeinrichtung sowie peripherer Komponenten, wie die Tastatur und der Anzeigeeinheit des Mobiltelefons. Der Mikroprozessor erhält seine Steuerbefehle von einem Steuerprogramm, welches in einem Festwertspeicher abgespeichert wird. Der Festwertspeicher, beispielsweise ein ROM oder EPROM, wird als Bauteil auf eine Leiterplatte des Mobiltelefons gesteckt oder eingelötet. Eine andere Möglichkeit besteht darin, den Festwertspeicher mit Hilfe einer externen Programmiereinrichtung, an die das Mobiltelefon über einen Interfacebaustein angeschlossen wird, von außen zu programmieren.

Im Zuge der Weiterentwicklung der Mobilfunktechnik entstehen neue Steuerprogramme, welche eine höhere Leistungsfähigkeit haben oder in denen in vorherigen Steuerprogrammen aufgetretene Fehler eleminiert wurden. Um neue Steuerprogramme anwenden zu können, müssen die Mobiltelefone üblicherweise zu einer Servicestelle gebracht und der Festwertspeicher mit Daten des neuen Steuerprogramms geladen bzw. der Festwertspeicherbaustein ausgetauscht werden. Eine solche Vorgehensweise ist umständlich und führt zu hohem technischen und wirtschaftlichen Aufwand.

Es ist Aufgabe der Erfindung, ein Mobilfunksystem, ein Verfahren zum Betreiben eines Mobilfunksystems bzw. eine mobile Funkstation anzugeben, das bzw. die bei geringem Hardwareaufwand auf einfache Weise für den Mikroprozessor des Mobilfunkgeräts ein neues Steuerprogramm bereitstellt.

Die Erfindung betrifft eine mobile Funkstation nach Anspruch 1 oder 2. Diese Funkstation kann über Funk mit einer Servicestation digitale Daten austauschen. Sie enthält einen Mikroprozessor, der auf einen ersten Speicherabschnitt zugreift, in welchem ein von ihm abzuarbeitendes Steuerprogramm gespeichert ist. Die mobile Funkstation ist dadurch gekennzeichnet, daß in einem zweiten Speicherabschnitt ein Ladesteuerprogramm gespeichert ist, daß der Mikroprozessor abhängig von einem Ladebefehl auf das Ladesteuerprogramm zugreift und bei dessen Abar-beitung von der Servicestation Daten eines neuen Steuerprogramms erhält und diese in einem dritten Speicherabschnitt speichert, und daß der Mikroprozessor nach dem Speichern des neuen Steuerprogramms zum Steuern der Datenkommunikation zwischen der Servicestation und der Funkstation auf das neue Steuerprogramm zugreift und dieses abarbeitet.

Bei der mobilen Funkstation nach der Erfindung kann das Steuerprogramm leicht gegen ein anderes ausgetauscht werden, wobei die bereits vorhandenen Hardware-Komponenten zur Datenkommunikation mit der Servicestation genutzt werden können.

Weiterhin betrifft die Erfindung ein Mobilfunksystem nach Anspruch 9 oder 10.

Die Erfindung geht von der Überlegung aus, daß die in einer mobilen Funkstation bereits vorhandenen Hardware-Komponenten genutzt werden können, um im Rahmen einer Datenkommunikation Daten eines neuen Steuerprogramms zu übernehmen. Erfindungsgemäß ist in der mobilen Funkstation ein Ladesteuerprogramm gespeichert, auf welches der Mikroprozessor zugreifen kann. Zur Steuerung des Zugriffs wird ein Ladebefehl erzeugt, welcher den Mikroprozessor veranlaßt, das Ladesteuerprogramm abzuarbeiten. Dieses Ladesteuerprogramm enthält Befehle, bei deren Ausführung der Mikroprozessor mit der zentralen Servicesation kommuniziert und die Daten des neuen Steuerprogramms selbsttätig übernimmt und abspeichert. Ein Eingriff in die Funkstation ist nicht erforderlich. Das Ladesteuerprogramm ist so beschaffen, daß nach seiner vollständigen Abarbeitung der Mikroprozessor beim Betrieb der mobilen Funkstation auf das neu geladene Steuerprogramm zugreift. Durch die Erfindung wird es also möglich, mobile Funkstationen mit einem neuen Steuerprogramm auszustatten, ohne daß diese Funkstationen zu einer Servicestelle gebracht werden müssen. Außerdem entfällt das Umprogrammieren des Festwertspeichers bzw. der Ersatz des Festwertspeicherbausteins. Da bei der Erfindung bereits vorhandene Hardware-Komponenten genutzt werden können, ist die Realisierung der Erfindung mit geringem technischen Aufwand verbunden.

Die Initiative zum Erzeugen des Ladebefehls kann auf Seiten des mobilen Funkgeräts oder auf Seiten der Servicestation ergriffen werden. Das Mobilfunksystem nach der Erfindung läßt sich dadurch flexibel einsetzen. Bei systembedingten Änderungen des Mobilfunknetzes können sämtliche an das Funknetz angeschlossenen Funkstationen zentral von der Servicestation mit neuen Steuerprogrammen ausgestattet werden. Eine andere Möglichkeit besteht darin, daß der Besitzer der Funkstation die Erneuerung seines Steuerprogramms wünscht, beispielsweise um zusätzliche Funktionen des Mobilfunknetzes zu nutzen. In einem solchen Fall kann der Besitzer durch eine Eingabe eines Codes das Laden des neuen Steuerprogramms und den Datenaustausch mit der Servicestation einleiten.

Die Speicherung der Daten des bisherigen Steuerprogramms, des neuen Steuerprogramms und des Ladesteuerprogramms kann in verschiedenen Abschnitten eines oder mehrerer Speicher erfolgen. Der erste und der dritte Speicherabschnitt können bei Verwendung eines gemeinsamen Speichers zusammenfallen, da nach dem Laden des neuen Steuerprogramms das bisherige Steuerprogramm nicht mehr benötigt wird und überschrieben werden kann. Der entsprechende erste Speicherabschnitt steht dann für das neue Steuerprogramm zur Verfügung.

Bei einem bevorzugten Ausführungsbeispiel enthält die Funkstation einen nichtflüchtigen Speicher, vorzugsweise einen E²PROM oder einen Flash-PROM, sowie eine Einrichtung, mittels der der nichtflüchtige Speicher zumindest sektorweise elektrisch löschbar und erneut beschreibbar ist, wobei der nichtflüchtige Speicher den ersten, den zweiten und/oder den dritten Speicherabschnitt enthält. Das Zusammenfassen sämtlicher Speicherabschnitte in einem einzigen nichtflüchtigen Speicher führt zu einer einfachen technischen Lösung. Die Einrichtung zum sektorweisen Löschen des nichtflüchtigen Speichers ist innerhalb der Funkstation angeordnet. Dadurch wird zwar der technische Aufwand geringfügig erhöht, jedoch überwiegen die Vorteile der einfachen Umprogrammierung des Steuerprogramms.

Gemäß einem weiteren Aspekt der Erfindung wird ein Verfahren zum Betreiben eines Mobilfunksystems nach den Merkmalen des Anspruchs 12 angegeben.

Ein alternatives Mobilfunksystem ist aus EP 0459344 bekannt.

Ausführungsbeispiele der Erfindung werden im folgenden anhand der Zeichnungen erläutert. Darin zeigt:
- Figur 1: für die Realisierung der Erfindung wesentliche Komponenten eines Mobiltelefons in einem Block- schaltbild,
- Figur 2: Schritte einer Ablaufsteuerung gemäß einem er- sten Ausführungsbeispiel in einem Flußdiagramm,
- Figur 3: Schritte einer Ablaufsteuerung gemäß einem zwei- ten Ausführungsbeispiel in einem Flußdiagramm, und
- Figur 4--: den Inhalt eines nichtflüchtigen Speichers zu verschiedenenen Phasen bei der Abarbeitung des Ladesteuerprogramms.

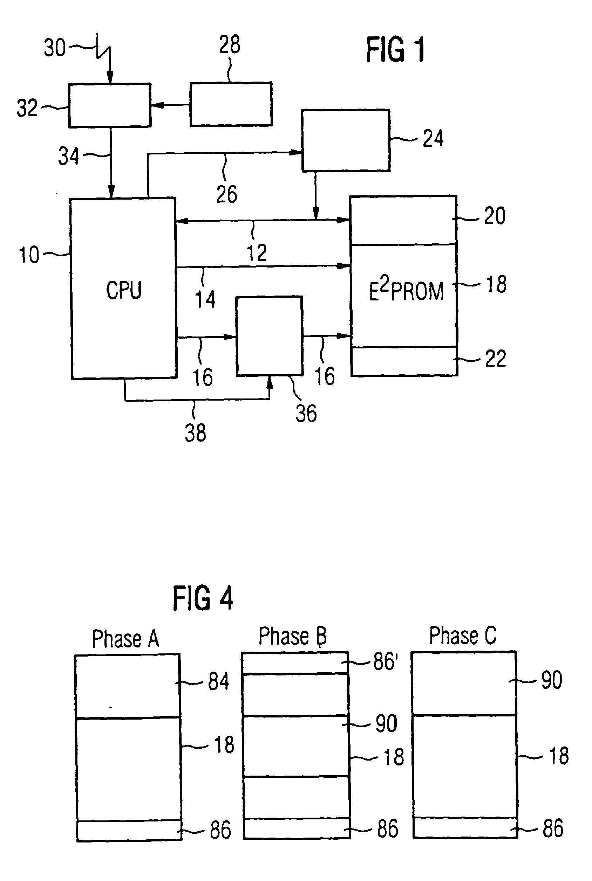

Figur 1 zeigt in einer Blockdarstellung wesentliche Hardware-Komponenten eines Mobiltelefons, die zur Realisierung der Erfindung verwendet werden. Ein Mikroprozessor 10 ist über einen Datenbus 12, einen Steuerbus 14 und einen Adreßbus 16 mit einem nichtflüchtigen Speicher 18 verbunden, in welchem in einem ersten Speicherabschnitt 20 ein Steuerprogramm zum Steuern des Mikroprozessors 10 gespeichert ist. Bei der Abarbeitung der Befehle des Steuerprogramms steuert der Mikroprozessor 10 die Sende- und die Empfangseinrichtung des Mobiltelefons. Ferner enthält der nichtflüchtige Speicher 18 einen zweiten Speicherbereich 22, in welchem ein Ladesteuerprogramm gespeichert ist, welches zur Datenkommunikation mit einer entfernten Servicestation (nicht dargestellt) für die Übertragung von Daten eines neuen Steuerprogramms aufgerufen wird. Der nichtflüchtige Speicher 18 kann beispielsweise ein E²PROM oder ein Flash-PROM sein.

An den Datenbus 12 ist eine interne Programmiereinrichtung 24 angeschlossen, mit deren Hilfe einzelne Sektoren des Speichers 18 elektrisch gelöscht und Daten erneut in den Speicher 18 eingeschrieben werden können. Wie noch beschrieben wird, sind diese Daten Befehlsdaten eines neuen Steuerprogramms oder Befehlsdaten des Ladesteuerprogramms, welches im Speicher 18 umkopiert wird. Die Programmiereinrichtung 24 wird über eine Steuerleitung 26 vom Mikroprozessor 10 angesteuert. Über eine Dateneingangsleitung 34 erhält der Mikroprozessor 10 ein codiertes Signal, das von einer Anpaßschaltung 32 aufbereitet wird. Das codierte Signal wird über eine Funkstrecke, angedeutet durch den Pfeil 30, von der Servicestation empfangen oder am Mobiltelefon über eine Tastatur 28 eingegeben. Der Mikroprozessor 10 erzeugt aus dem codierten Signal einen Ladebefehl, der das Laden eines neuen Steuerprogramms auslöst. -

In den Adreßbus 16 ist eine frei programmierbare Adressenänderungsschaltung 36 eingeschaltet, die durch den Mikroprozessor 10 über eine Steuerleitung 38 gesteuert wird. Die Adressenänderungsschaltung 36 kann die auf dem Adreßbus 16 ankom-mende Adresse abhängig vom Signal auf der Steuerleitung 38 ändern. Beispielsweise kann sie die vom Mikroprozessor 10 nach einem Reset ausgegebene Anfangsandresse "H00" (H steht für hexadezimale Schreibweise) für den Speicher 18 auf einen Wert ändern, welcher der Anfangsadresse des Ladesteuerprogramms im zweiten Speicherabschnitt 22 entspricht.

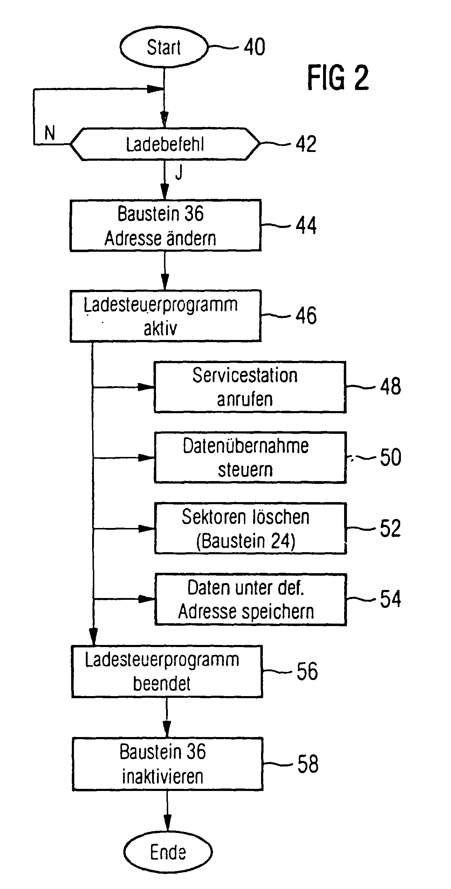

Die Funktionsweise des in Figur 1 gezeigten Ausführungsbeispiels wird im folgenden anhand des Flußdiagramms nach Figur 2 erläutert. Nach dem Start (Schritt 40) wird in Schritt 42 ermittelt, ob ein Ladebefehl in Form eines codierten Signals von der Servicestation über Funk übermittelt oder über die Tastatur 28 eingegeben worden ist. Wenn der Mikroprozessor 10 einen solchen Ladebefehl decodiert, schaltet er die Adressenänderungsschaltung 36 aktiv, welche die auf dem Adreßbus 16 ankommende Adresse ändert. Die Adressenänderungsschaltung 36 kann z.B. als Addierbaustein realisiert sein, der zur ausgegebenen Adresse eine konstante Adresse hinzuaddiert. Nach einem Reset des Mikroprozessors 10 wird zur Abarbeitung des Steuerprogramms normalerweise die Anfangsadresse des Speichers 18 ausgegeben. Die Adressenänderungsschaltung 36 addiert zu diesem Anfangswert, beispielsweise "H00", den Adressenwert hinzu, unter dem das Ladesteuerprogramm im Speicherabschnitt 22 gespeichert ist. Im darauffolgenden Schritt 26 wird somit anstelle des bisherigen Steuerprogramms im Speicherabschnitt 20 das Ladesteuerprogramm 46 aktiviert und dessen Befehle abgearbeitet.

Im Schritt 48 veranlaßt das Ladesteuerprogramm, daß die Servicestation durch das Mobiltelefon angerufen und die Ladung eines neuen Steuerprogramms angefordert wird. Im nächsten Schritt 50 steuert der Mikroprozessor 10 die Übernahme von Daten von der Servicestation, wobei die Daten in einem flüchtigen Speicher (RAM) zwischengespeichert werden. Im darauffolgenden Schritt 52 wird die Programmiereinrichtung 24 angesteuert, welche die für das neue Steuerprogramm erforderlichen Sektoren im Speicher 18 löscht. Anschließend werden im Schritt 54 die übersandten Daten des neuen Steuerprogramms beginnend mit einer definierten Adresse, vorzugsweise der Adresse "H00", abgespeichert. Das Ladesteuerprogramm ist nunmehr abgearbeitet (Schritt 56), und die Adressenänderungsschaltung 36 wird wieder inaktiv geschaltet (Schritt 58), so daß die ursprünglichen Adressen auf dem Adreßbus 16 durchgeschaltet werden.

Wenn nach einem erneuten Einschalten des Mobiltelefons bzw. nach einem Reset des Mikroprozessors 10 auf den Speicher 18 zugegriffen wird, so beginnt die Mikroprozessorsteuerung 10 das unter der Anfangsadresse "H00" abgespeicherte neue Steuerprogramm abzuarbeiten. Das Mobiltelefon arbeitet jetzt entsprechend den durch das neue Steuerprogramm festgelegten technischen Funktionen.

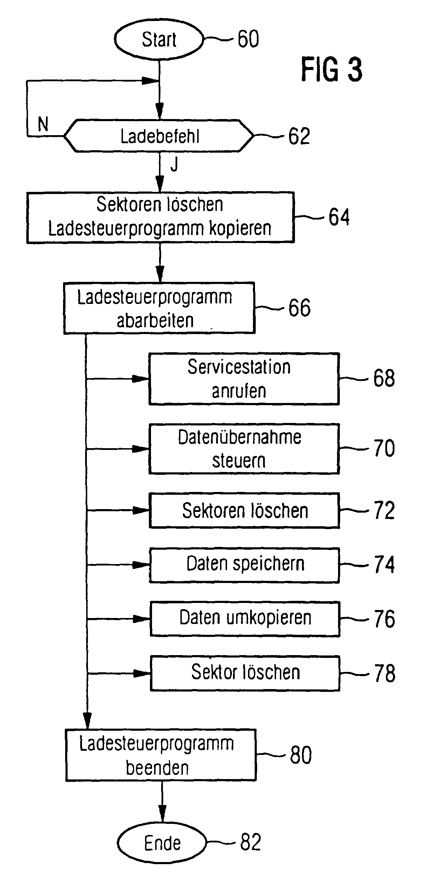

Eine weitere Ausführungsform der Erfindung wird im folgenden im Zusammenhang mit einer Ablaufsteuerung gemäß den Schritten nach Figur 3 beschrieben. Bei diesem Ausführungsbeispiel wird die zuvor beschriebene Adressenänderungsschaltung 36 nicht benötigt. Nach dem Start (Schritt 60) prüft die Ablaufsteuerung, ob ein Ladebefehl vorliegt oder nicht (Schritt 62). Wenn das Laden eines neuen Steuerprogramms gewünscht wird, so wird im Schritt 64 die Programmiereinrichtung 24 aktiviert, welche Sektoren im Anfangsbereich des nichtflüchtigen Speichers 18 löscht. Anschließend wird das Ladesteuerprogramm, welches an einer vorgegebenen Stelle des Speichers 18 abgespeichert ist, vorzugsweise im letzten Speicherabschnitt, an den Anfang des Speichers 18 geladen (Schritt 64).

Im nächsten Schritt 66 wird das Ladesteuerprogramm abgearbeitet. Beim Mobilfunksystem muß zur Datenübertragung zwischen Servicestation und mobiler Funkstation fortlaufend ein Funkkontakt bestehen, damit sichergestellt ist, daß die Daten einwandfrei übertragen werden. Im Falle, daß eine Unterbrechung des Funkkontakts auftritt, beispielsweise bei Funkstille in abgeschirmten Bereichen, muß die Datenübertragung erneut gestartet werden. Wenn das Mobiltelefon durch ein Reset-Signal zurückgesetzt wird, oder neu eingeschaltet wird, so arbeitet der Mikroprozessor 10 das im Speicher 18 gespeicherte Steuerprogramm beginnend mit der Anfangsadresse "H00" ab. Da gemäß dem Ausführungsbeispiel der Erfindung unter der Anfangsadresse nunmehr das Ladesteuerprogramm abgespeichert ist, ist die Wiederholung der Datenübertragung nach einer eventuellen Unterbrechung sichergestellt.

Bei der Abarbeitung des Ladesteuerprogramms wird im Schritt 68 die zentrale Servicestation angerufen und im nachfolgenden Schritt 70 die Datenübernahme gestartet. Die Daten des neuen Steuerprogramms werden beispielsweise im Arbeitsspeicher des Mikroprozessors 10 zwischengespeichert. Im Schritt 72 werden vorbestimmte Sektoren des Speichers 18 gelöscht, um in diesen Sektoren das neue Steuerprogramm zu speichern (Schritt 74). Danach werden im Schritt 76 die Daten des neuen Steuerprogramms an den Anfang des Speichers 18 kopiert und die Sektoren gelöscht (Schritt 78), in denen die Daten des neuen Steuerprogramms zwischengespeichert waren. Beim Kopieren der Daten (Schritt 76) wird das Ladesteuerprogramm im Anfangsbereich des Speichers 18 überschrieben. Um dennoch Befehle des Ladesteuerprogramms abarbeiten zu können, werden diese im Arbeitsspeicher (RAM) des Mikroprozessors 10 zwischengespeichert.

Figur 4 zeigt den Inhalt des Speichers 18 zu verschiedenen Phasen beim Laden des neuen Steuerprogramms gemäß der Ablaufsteuerung nach Figur 3. Vor-dem Auftreten eines Ladebefehls ist das bisherige Steuerprogramm 84 im Anfangsbereich des Speichers 18 gespeichert; das Ladesteuerprogramm 86 befindet sich im letzten Sektor des Speichers 18. Selbstverständlich kann das Ladesteuerprogramm 86 auch an einer anderen, vorbestimmten Stelle des Speichers 18 abgespeichert sein. Nach dem Auftreten des Ladebefehls (Phase B) wird das Ladesteuerprogramm 86 an den Anfang des Speichers 18 als Ladesteuerprogramm 86' kopiert. Die Daten für das neue Steuerprogramm 90 werden in einen vorbestimmten Sektor des Speichers 18 eingeschrieben und dort zwischengespeichert. In der abschließenden Phase C wird der Anfangsbereich des Speichers 18 gelöscht und die Daten des neuen Steuerprogramms 90 an den Anfang des Speichers 18 verschoben. Beim Neustart des Mikroprozessors 10 wird unter Zugriff auf die Anfangsadresse des Speichers 18 nunmehr das neue Steuerprogramm 90 abgearbeitet.

Mit dem Abarbeiten des Ladesteuerprogramms (Schritt 80) in Figur 3 ist die Ablaufsteuerung zum Laden eines neuen Steuerprogramms beendet (Schritt 82). Nach einem Reset des Mikroprozessors 10 oder nach dem Einschalten des Mobiltelefons wird das neue Steuerprogramm 90 beginnend mit der Anfangsadresse des Speichers 18 abgearbeitet.

Die beschriebenen Ausführungsbeispiele der Erfindung können in der Praxis vielfach abgeändert werden. So kann die Datenübertragung für die Daten des neuen Steuerprogramms mehrfach wiederholt werden, um die Datensicherheit zu verbessern. Eine andere Variante besteht darin, daß das Mobiltelefon nach dem Anruf der Servicestation (Schritte 48 und 68) auf den Rückruf der Servicestation wartet, wo eine Datentverarbeitungsanlage als Steuerung die Daten für das neue Steuerprogramm zur Verfügung stellt und überträgt.

Als Zwischenspeicher für die Daten des neuen Steuerprogramms kann alternativ ein batteriegepufferter flüchtiger Speicher (RAM) eingesetzt werden. Ebenso kommt als Speicher für das neue Steuerprogramm ein Ferro- oder ein Mirror-RAM in Betracht.

Der Speicher 18 muß entsprechend der Datenmenge des neuen Speicherprogramms vergrößert sein. Da ein zusätzlicher Speicherabschnitt für die Zwischenspeicherung des neuen Steuerprogramms lediglich in der Phase B benötigt wird (vgl. Figur 4), kann dieser Speicherbereich im Normalbetrieb des Mobiltelefons für andere Funktionen verwendet werden, beispielsweise für Sprachspeicherfunktionen, für die temporäre Speicherung von Daten oder als Speicherbereich für einen Anrufbeantworter.

Als weitere Varianten der Ausführungsbeispiele können bei der Übertragung der Daten für das neue Steuerprogramm gerätespezifische Daten mit übermittelt werden, beispielsweise die Seriennummer, die Typnummer oder die sogenannte IMEI (International Mobile Equipment Identity). Mithilfe solcher Daten können von der Servicestation aus beispielsweise gestohlene Geräte gesperrt, gerätespezifische Software geladen, Zusatzfunktionen für die mobile Funkstation je nach Kundenwunsch freigegeben bzw. gesperrt, die Zuschaltliste der ausgelieferten Funkstationen leicht auf dem laufenden gehalten und Statistiken über benötigte Funktionen für den Anwender als Kundenprofil erstellt werden. Weiterhin ist es möglich, bei der Übertragung der Daten für das neue Steuerprogramm Merkmals-Signale zu übertragen, welche Gerätefunktionen auslösen, die zuvor einprogrammiert wurden. Als weitere Daten können zwischen der mobilen Funkstation und der Servicestation Daten über die Laufzeit des Gerätes, statistische Daten über die Verwendungshäufigkeit der Funkstation, Daten über das mobile Verhalten der Funkstation (z.B. eine Hand-Over-Statistik), Daten über den Batteriezustand der Funkstation etc. ermittelt und an die Servicestation übertragen werden.

Wie erwähnt, kann die Initiative zum Starten der Übertragung der Daten für das neue Steuerprogramm von der Funkstation ausgehen. Dabei wird von der Funkstation aus die Servicestation angerufen, und diese übermittelt sogleich die Daten für das neue Steuerprogramm. Bei diesem Betriebsfall ist die Auslastung der Datenverarbeitungsanlage in der Servicestation ungünstig, da der Zugriff von vielen Funkstationen zeitlich zufällig verteilt ist. Eine andere Betriebsart besteht darin, daß nach dem Anruf der Funkstation die Servicestation die Initiative zum Starten der Datenübertragung ergreift und selbst zurückruft, wobei die Teilnehmernummer IMSI (International Mobile Subscriber Identity) der Funkstation mit übertragen wird. Bei dieser Betriebsart läßt sich die Auslastung der Servicestation verbessern.

### Bezugszeichenliste

- 10: Mikroprozessor
- 12: Datenbus
- 14: Steuerbus
- 16: Adreßbus
- 18: nichtflüchtiger Speicher
- 20: erster Speicherabschnitt
- 22: dritter Speicherabschnitt
- 24: Programmiereinrichtung
- 26: Steuerleitung
- 28: Tastatur
- 30: Funksymbol
- 32: Anpaßschaltung
- 34: Dateneingangsleitung
- 36: Adressenänderungsschaltung
- 38: Steuerleitung
- 40 - 82: Steuerschritte
- 84: bisheriges Steuerprogramm
- 86, 86': Ladesteuerprogramm
- 90: neues Steuerprogramm

## Patentansprüche

1. Mobile Funkstation zur Datenkommunikation über Funk mit anderen Stationen, mit folgenden Einrichtungen:
- einem Mikroprozessor (10) zum Steuern der Funkstation und der Datenkommunikation,
- einen nichtflüchtigen Speicher (18)
- einen Adressbus (16), über den der nichtflüchtige Speicher (18) und der Mikroprozessor (10) miteinander verbunden sind,
- eine Einrichtung (24), mittels der der nichtflüchtige Speicher (18) elektrisch löschbar und erneut beschreibbar ist, wobei
- in einem ersten Speicherabschnitt (20) des nichtflüchtigen Speicher (18) ein Steuerprogramm (84, 90) abgespeichert ist, das von dem Mikroprozessor (10) zur Steuerung der Funkstation abzuarbeiten ist, wobei das Steuerprogramm (84, 90) an einer Adresse (Anfangsadresse) anfängt, die der Mikroprozessor (10) nach einem Start oder Neustart der Mobilen Funkstation ansteuert,
- in einem zweiten Speicherabschnitt (22) ein Ladesteuerprogramm (86, 86') umfasst, das vom Mikroprozessor (10) abzuarbeiten ist, wenn ein neues Steuerprogramm über Funk in den nichtflüchtigen Speicher (18) zu laden ist, **dadurch gekennzeichnet,**
- **dass** die Adressen auf dem Adressbus durch einen Logikbaustein (36) veränderbar sind,
- **dass** der Mikroprozessor (10) nach dem Vorliegen eines Ladebefehls den Logikbaustein (36) so steuert, dass die Adresse auf dem Adressbus in einen Adresswert geändert wird, unter dem das Ladesteuerprogramm (86) gespeichert ist, und
- **dass** der Mikroprozessor (10) nach dem Abarbeiten des Ladesteuerprogramms (86) den logischen Baustein (36) inaktiviert, um die Adressen auf dem Adressbus (16) nicht mehr zu verändern.

2. Mobile Funkstation zur Datenkommunikation über Funk mit anderen Stationen, mit folgenden Einrichtungen:
- einem Mikroprozessor (10) zum Steuern der Funkstation und der Datenkommunikation,
- einen nichtflüchtigen Speicher (18),
- eine Einrichtung (24), mittels der der nichtflüchtige Speicher (18) elektrisch löschbar und erneut beschreibbar ist, wobei
- in einem ersten Speicherabschnitt (20) des nichtflüchtigen Speicher (18) ein Steuerprogramm (84, 90) abgespeichert ist, das von dem Mikroprozessor (10) zur Steuerung der Funkstation abzuarbeiten ist, wobei das Steuerprogramm (84, 90) an einer Adresse (Anfangsadresse) anfängt, die der Mikroprozessor (10) nach einem Start oder Neustart der Mobilen Funkstation ansteuert,
- in einem zweiten Speicherabschnitt (22) ein Ladesteuerprogramm (86, 86') umfasst, das vom Mikroprozessor (10) abzuarbeiten ist, wenn ein neues Steuerprogramm in den nichtflüchtigen Speicher (18) zu laden ist,
**dadurch gekennzeichnet,**
der Mikroprozessor (10) bei Vorliegen eines Ladebefehls
- den ersten Speicherabschnitt (20) des nichtflüchtigen Speicher (18) löscht,
- das Ladesteuerprogramm (86, 86') an den Anfang des ersten Speicherabschnitt (20) des nichtflüchtigen Speicher (18) ladet,
- das Ladesteuerprogramm (86, 86') abarbeitet.

3. Mobile Funkstation nach Anspruch 1 oder 2, **dadurch gekennzeichnet, dass** der nichtflüchtige Speicher (18) als E²PROM oder einen Flash-PROM ausgebildet ist.

4. Mobile Funkstation nach einem der vorhergehenden Ansprüche, **dadurch gekennzeichnet, dass** der Mikroprozessor (10) beim Abarbeiten des Ladesteuerprogramms (84, 86') den ersten Speicherabschnitt (20) löscht und mit den Daten des neuen Steuerprogramms (90) beschreibt.

5. Mobile Funkstation nach einem der vorhergehenden Ansprüche, **dadurch gekennzeichnet, dass** der nichtflüchtige Speicher (18) zumindest sektorweise elektrisch löschbar und erneut beschreibbar ist.

6. Mobile Funkstation nach einem der Ansprüche 2 bis 5, **dadurch gekennzeichnet, dass** der Mikroprozessor (10) gegen Ende des Abarbeitens des Ladesteuerprogramms (86') das neue Steuerprogramm (90) an den Anfang des nichtflüchtigen Speichers (18) kopiert.

7. Mobile Funkstation nach einem der vorhergehenden Ansprüche, **dadurch gekennzeichnet, dass** die Erzeugung des Ladebefehls entweder durch Eingabe eines Codes an einer Tastatur (28) der Funkstation oder durch Aussenden eines codierten Signals durch die Servicestation an die mobile Funkstation veranlasst wird.

8. Mobile Funkstation nach einem der vorhergehenden Ansprüche, **dadurch gekennzeichnet, dass** zwischen der Servicestation und der Funkstation die Teilnehmernummer des Teilnehmers am Mobilfunksystem und/oder die Gerätenummer der mobilen Funkstation ausgetauscht werden.

9. Mobilfunksystem mit
einer Servicestation, die über zwischengeschaltete Vermittlungseinheiten mit mindestens einer mobilen Funkstation in Funkkontakt steht und mit dieser digitale Daten austauscht, wobei die mobile Funkstation folgenden Einrichtungen umfasst:
- einen Mikroprozessor (10) zum Steuern der Funkstation und der Datenkommunikation,
- einen nichtflüchtigen Speicher (18),
- einen Adressbus (16), über den der nichtflüchtige Speicher (18) und der Mikroprozessor (10) miteinander verbunden sind,
- eine Einrichtung (24), mittels der der nichtflüchtige Speicher (18) elektrisch löschbar und erneut beschreibbar ist, wobei
- in einem ersten Speicherabschnitt (20) des nichtflüchtigen Speicher (18) ein Steuerprogramm (84, 90) abgespeichert ist, das von dem Mikroprozessor (10) zur Steuerung der Funkstation abzuarbeiten ist, wobei das Steuerprogramm (84, 90) an einer Adresse (Anfangsadresse) anfängt, die der Mikroprozessor (10) nach einem Start oder Neustart der Mobilen Funkstation ansteuert,
- in einem zweiten Speicherabschnitt (22) ein Ladesteuerprogramm (86, 86') umfasst, das vom Mikroprozessor (10) abzuarbeiten ist, wenn ein neues Steuerprogramm über Funk in den nichtflüchtigen Speicher (18) zu laden ist,
**dadurch gekennzeichnet,**
- **dass** die Adressen auf dem Adressbus durch einen Logikbaustein (36) veränderbar sind,
- **dass** der Mikroprozessor (10) nach dem Vorliegen eines Ladebefehls den Logikbaustein (36) so steuert, dass die Adresse auf dem Adressbus in einen Adresswert geändert wird, unter dem das Ladesteuerprogramm (86) gespeichert ist, und
- **dass** der Mikroprozessor (10) nach dem Abarbeiten des Ladesteuerprogramms (86) den logischen Baustein (36) inaktiviert, um die Adressen auf dem Adressbus (16) nicht mehr zu verändern.

10. Mobilfunksystem mit
einer Servicestation, die über zwischengeschaltete Vermittlungseinheiten mit mindestens einer mobilen Funkstation in Funkkontakt steht und mit dieser digitale Daten austauscht, wobei die mobile Funkstation folgenden Einrichtungen umfasst:
- einen Mikroprozessor (10) zum Steuern der Funkstation und der Datenkommunikation,
- einen nichtflüchtigen Speicher (18),
- eine Einrichtung (24), mittels der der nichtflüchtige Speicher (18) elektrisch löschbar und erneut beschreibbar ist, wobei
- in einem ersten Speicherabschnitt (20) des nichtflüchtigen Speicher (18) ein Steuerprogramm (84, 90) abgespeichert ist, das von dem Mikroprozessor (10) zur Steuerung der Funkstation abzuarbeiten ist, wobei das Steuerprogramm (84, 90) an einer Adresse (Anfangsadresse) anfängt, die der Mikroprozessor (10) nach einem Start oder Neustart der Mobilen Funkstation ansteuert,
- in einem zweiten Speicherabschnitt (22) ein Ladesteuerprogramm (86, 86') umfasst, das vom Mikroprozessor (10) abzuarbeiten ist, wenn ein neues Steuerprogramm über Funk in den nichtflüchtigen Speicher (18) zu laden ist,
**dadurch gekennzeichnet,**
der Mikroprozessor (10) bei Vorliegen eines Ladebefehls
- den ersten Speicherabschnitt (20) des nichtflüchtigen Speicher (18) löscht,
- das Ladesteuerprogramm (86, 86') an den Anfang des ersten Speicherabschnitt (20) des nichtflüchtigen Speicher (18) ladet,
- das Ladesteuerprogramm (86, 86') abarbeitet.

11. Mobilfunksystem nach Anspruch 9 oder 10, **dadurch gekennzeichnet, dass** der nichtflüchtiger Speicher vorzugsweise ein E²PROM oder ein Flash-PROM ist.

12. Verfahren zum Betreiben eines Mobilfunksystems, bei dem eine Servicestation über zwischengeschaltete Vermittlungseinheiten mit mindestens einer mobilen Funkstation in Funkkontakt steht und mit dieser digitale Daten austauscht,
wobei die mobile Funkstation folgende Einrichtungen umfasst:
- einen Mikroprozessor (10) zum Steuern der Funkstation und der Datenkommunikation,
- einen nichtflüchtigen Speicher (18),
- einen Adressbus (16), über den der nichtflüchtige Speicher (18) und der Mikroprozessor (10) miteinander verbunden sind,
- eine Einrichtung (24), mittels der der nichtflüchtige Speicher (18) elektrisch löschbar und erneut beschreibbar ist, und wobei
- von dem Mikroprozessor (10) ein Steuerprogramm (84, 90) zum Betreiben der Mobilen Funkstation abgearbeitet wird, das in einem ersten Speicherabschnitt (20) des nichtflüchtigen Speicher (18) abgespeichert ist, wobei das Steuerprogramm (84, 90) an einer Adresse (Anfangsadresse) anfängt, die von dem Mikroprozessor (10) nach einem Start oder Neustart der Mobilen Funkstation über den Adressbus (16) angesteuert wird,
- von dem Mikroprozessor (10) ein Ladesteuerprogramm (86, 86') zum Laden eines neuen Steuerprogramms abgearbeitet wird, das in einem zweiten Speicherabschnitt (22) des nichtflüchtigen Speicher (18) abgespeichert ist,
**dadurch gekennzeichnet,**
**dass** von dem Mikroprozessor (10) bei Vorliegen eines Ladebefehls
- der erste Speicherabschnitt (20) des nichtflüchtigen Speicher (18) gelöscht wird,
- das Ladesteuerprogramm (86, 86') an den Anfang des ersten Speicherabschnitt (20) des nichtflüchtigen Speicher (18) geladen wird,
- das Ladesteuerprogramm (86, 86') abgearbeitet wird.

## Claims

1. Mobile radio station for data communication via radio with other stations, with the following devices:
- a microprocessor (10) for controlling the radio station and the data communication,
- a non-volatile memory (18)
- an address bus (16), via which the non-volatile memory (18) and the microprocessor (10) are connected to one another,
- a device (24) by means of which the non-volatile memory (18) is able to be electrically erased and rewritten, wherein
- a control program (84, 90) which is to be processed by the microprocessor (10) for controlling the radio station is stored in a first memory section (20) of the non-volatile memory (18), wherein the control program (84, 90) starts at an address (start address), which the microprocessor (10) activates after a start or restart of the mobile radio station,
- included in a second memory section (22) is a load control program (86, 86'), which is to be processed by the microprocessor (10) if a new control program is to be loaded by radio into the non-volatile memory (18),
**characterised in that,**
- the addresses on the address bus are able to be modified by a logic chip (36),
- that the microprocessor (10) controls the logic chip (36) according to the presence of a load command so that the address on the address bus is modified into an address value at which the load control program (86) is stored, and
- the microprocessor (10), after the processing of the load control program (86), deactivates the logic chip (36) in order to no longer modify the addresses on the address bus (16).

2. Mobile radio station for data communication via radio with other stations, with the following devices:
- a microprocessor (10) for controlling the radio station and the data communication,
- a non-volatile memory (18),
- a device (24) by means of which the non-volatile memory (18) is able to be electrically erased and rewritten, wherein
- a control program (84, 90), which is to be processed by the microprocessor (10) for controlling the radio station is stored in a first memory section (20) of the non-volatile memory (18), wherein the control program (84, 90) starts at an address (start address), which the microprocessor (10) activates after a start or restart of the mobile radio station,
- included in a second memory section (22) is a load control program (86, 86'), which is to be processed by the microprocessor (10) if a new control program is to be loaded by radio into the non-volatile memory (18),
**characterised in that,**
the microprocessor (10), if a load command is present
- erases the first memory section (20) of the non-volatile memory (18),
- loads the load control program (86, 86') at the start of the first memory section (20) of the non-volatile memory (18),
- processes the load control program (86, 86').

3. Mobile radio station according to claim 1 or 2, **characterised in that** the non-volatile memory (18) is embodied as an E²PROM or as a flash-PROM.

4. Mobile radio station according to one of the preceding claims, **characterised in that** the microprocessor (10), on processing the load control program (84, 86'), erases the first memory section (20) and writes the data of the new control program (90) into it.

5. Mobile radio station according to one of the preceding claims, **characterised in that** the non-volatile memory (18) is able to be electrically erased and rewritten, at least in sectors.

6. Mobile radio station according to one of claims 2 to 5, **characterised in that** the microprocessor (10), towards the end of the processing of the load control program (86'), copies the new control program (90) to the start of the non-volatile memory (18).

7. Mobile radio station according to one of the preceding claims, **characterised in that** the load command is generated either by entering a code at a keyboard (28) of the radio station or by transmission of a coded signal by the service station to the mobile radio station.

8. Mobile radio station according to one of the preceding claims, **characterised in that** the subscriber number of the subscriber at the mobile radio system and/or the device number of the mobile radio station are exchanged between the service station and the radio station.

9. Mobile radio system with
a service station, which is in radio contact via intermediate switching units with at least one mobile radio station and exchanges digital data with the latter, wherein the mobile radio station includes the following devices:
- a microprocessor (10) for controlling the radio station and the data communication,
- a non-volatile memory (18)
- an address bus (16), via which the non-volatile memory (18) and the microprocessor (10) are connected to one another,
- a device (24), by means of which the non-volatile memory (18) is able to be electrically erased and rewritten, wherein
- a control program (84, 90) is stored in a first memory section (20) of the non-volatile memory (18), which is to be processed by the microprocessor (10) for controlling the radio station, wherein the control program (84, 90) starts at an address (start address), which the microprocessor (10) activates after a start or restart of the mobile radio station,
- included in a second memory section (22) is a load control program (86, 86'), which is to be processed by the microprocessor (10) if a new control program is to be loaded by radio into the non-volatile memory (18),
**characterised in that,**
- the addresses on the address bus are able to be modified by a logic chip (36),
- the microprocessor (10) controls the logic chip (36) according to the presence of a load command so that the address on the address bus is modified into an address value at which the load control program (86) is stored, and
- the microprocessor (10) after the processing of the load control program (86) deactivates the logic chip (36) in order to no longer modify the addresses on the address bus (16).

10. Mobile radio system with
a service station, which is in radio contact via intermediate switching units with at least one mobile radio station in and exchanges digital data with the latter, wherein the mobile radio station includes the following devices:
- a microprocessor (10) for controlling the radio station and the data communication,
- a non-volatile memory (18),
- a device (24), by means of which the non-volatile memory (18) is able to be electrically erased and rewritten, wherein
- a control program (84, 90) which is to be processed by the microprocessor (10) for controlling the radio station is stored in a first memory section (20) of the non-volatile memory (18), wherein the control program (84, 90) starts at an address (start address), which the microprocessor (10) activates after a start or restart of the mobile radio station,
- included in a second memory section (22) is a load control program (86, 86'), which is to be processed by the microprocessor (10) if a new control program is to be loaded by radio into the non-volatile memory (18),
**characterised in that,**
if a load command is present, the microprocessor (10)
- erases the first memory section (20) of the non-volatile memory (18),
- loads the load control program (86, 86') at the start of the first memory section (20) of the non-volatile memory (18),
- processes the load control program (86, 86').

11. Mobile radio system according to claim 9 or 10, **characterised in that** the non-volatile memory (18) is preferably an E²PROM or as a flash-PROM.

12. Method for operating a mobile radio system, in which a service station is in radio contact via intermediate switching units with at least one mobile radio station and exchanges digital data with the latter,
wherein the mobile radio station includes the following devices:
- a microprocessor (10) for controlling the radio station and the data communication,
- a non-volatile memory (18)
- an address bus (16), via which the non-volatile memory (18) and the microprocessor (10) are connected to one another,
- a device (24), by means of which the non-volatile memory (18) is able to be electrically erased and rewritten, and
wherein
- a control program (84, 90) which is stored in a first memory section (20) of the non-volatile memory (18) for operating the mobile radio station, is processed by the microprocessor (10), wherein the control program (84, 90) starts at an address (start address), which is activated by the microprocessor (10) via the address bus (16) after a start or restart of the mobile radio station,
- a load control program (86, 86') for loading a new control program, which is stored in a second memory section (22) of the non-volatile memory (18), is processed by the microprocessor (10),
**characterised in that,**
if a load command is present, the microprocessor (10)
- erases the first memory section (20) of the non-volatile memory (18),
- loads the load control program (86, 86') at the start of the first memory section (20) of the non-volatile memory (18),
- processes the load control program (86, 86').

## Revendications

1. Station radio mobile pour la radiocommunication de données avec d'autres stations, comprenant les dispositifs suivants :
- un microprocesseur (10) pour commander la station radio et la communication de données ;
- une mémoire non volatile (18) ;
- un bus d'adresses (16) via lequel la mémoire non volatile (18) et le microprocesseur (10) sont reliés entre eux ;
- un dispositif (24) au moyen duquel la mémoire non volatile (18) peut être effacée et réécrite électriquement ;
- dans une première section de mémoire (20) de la mémoire non volatile (18) étant stocké un programme de commande (84, 90) que le microprocesseur (10) doit exécuter pour commander la station radio, le programme de commande (84, 90) commençant à une adresse (adresse de départ) que le microprocesseur (10) active après un départ ou un nouveau départ de la station radio mobile ;
- une deuxième section de mémoire (22) contenant un programme de commande de chargement (86, 86') qui doit être exécuté par le microprocesseur (10) lorsqu'un nouveau programme de commande doit être chargé par voie hertzienne dans la mémoire non volatile (18),
**caractérisée en ce que** :
- les adresses, sur le bus d'adresses, peuvent être modifiées par un composant logique (36) ;
- le microprocesseur (10) commande, suivant la présence d'un ordre de chargement, le composant logique (36) de manière telle que l'adresse, sur le bus d'adresses, est transformée en une valeur d'adresse sous laquelle le programme de commande de chargement (86) est stocké et
- le microprocesseur (10), après l'exécution du programme de commande de chargement (86), désactive le composant logique (36) pour ne plus modifier les adresses sur le bus d'adresses (16).

2. Station radio mobile pour la radiocommunication de données avec d'autres stations, comprenant les dispositifs suivants :
- un microprocesseur (10) pour commander la station radio et la communication de données ;
- une mémoire non volatile (18) ;
- un dispositif (24) au moyen duquel la mémoire non volatile (18) peut être effacée et réécrite électriquement ;
- dans une première section de mémoire (20) de la mémoire non volatile (18) étant stocké un programme de commande (84, 90) que le microprocesseur (10) doit exécuter pour commander la station radio, le programme de commande (84, 90) commençant à une adresse (adresse de départ) que le microprocesseur (10) active après un départ ou un nouveau départ de la station radio mobile ;
- une deuxième section de mémoire (22) contenant un programme de commande de chargement (86, 86') qui doit être exécuté par le microprocesseur (10) lorsqu'un nouveau programme de commande doit être chargé dans la mémoire non volatile (18),
- **caractérisée en ce que**
le microprocesseur (10), en présence d'un ordre de chargement :
efface la première section de mémoire (20) de la mémoire non-volatile (18) ;
- charge le programme de commande de chargement (86, 86') au début de la première section de mémoire (20) de la mémoire non volatile (18) ;
- exécute le programme de commande de chargement (86, 86').

3. Station radio mobile selon la revendication 1 ou 2, **caractérisée en ce que** la mémoire non volatile (18) se présente sous la forme d'une mémoire E2PROM ou d'une mémoire flash PROM.

4. Station radio mobile selon l'une des revendications précédentes, **caractérisée en ce que** le microprocesseur (10), lors de l'exécution du programme de commande de chargement (84, 86'), efface la première section de mémoire (20) et y écrit les données du nouveau programme de commande (90).

5. Station radio mobile selon l'une des revendications précédentes, **caractérisée en ce que** la mémoire non volatile (18) peut être effacée et réécrite électriquement, du moins par secteurs.

6. Station radio mobile selon l'une des revendications 2 à 5, **caractérisée en ce que** le microprocesseur (10), vers la fin de l'exécution du programme de commande de chargement (86'), copie le nouveau programme de commande (90) au début de la mémoire non volatile (18).

7. Station radio mobile selon l'une des revendications précédentes, **caractérisée en ce que** la génération de l'ordre de chargement est provoquée soit par saisie d'un code sur un clavier (28) de la station radio soit par envoi d'un signal codé par la station de service à la station mobile.

8. Station radio mobile selon l'une des revendications précédentes, **caractérisée en ce que** sont échangés, entre la station de service et la station radio, le numéro de l'usager du système radio mobile et/ou le numéro d'appareil de la station radio mobile.

9. Système radio mobile comportant une station de service qui est en contact radio avec au moins une station radio mobile via des unités de commutation interposées et qui échange des données numériques avec celle-ci, la station radio mobile comprenant les dispositifs suivants :
- un microprocesseur (10) pour commander la station radio et la communication de données ;
- une mémoire non volatile (18) ;
- un bus d'adresses (16) via lequel la mémoire non volatile (18) et le microprocesseur (10) sont reliés entre eux ;
- un dispositif (24) au moyen duquel la mémoire non volatile (18) peut être effacée et réécrite électriquement ;
- dans une première section de mémoire (20) de la mémoire non volatile (18) étant stocké un programme de commande (84, 90) que le microprocesseur (10) doit exécuter pour commander la station radio, le programme de commande (84, 90) commençant à une adresse (adresse de départ) que le microprocesseur (10) active après un départ ou un nouveau départ de la station radio mobile ;
- une deuxième section de mémoire (22) contenant un programme de commande de chargement (86, 86') qui doit être exécuté par le microprocesseur (10) lorsqu'un nouveau programme de commande doit être chargé par voie hertzienne dans la mémoire non volatile (18) ;
**caractérisé en ce que** :
- les adresses, sur le bus d'adresses, peuvent être modifiées par un composant logique (36) ;
- le microprocesseur (10) commande, suivant la présence d'un ordre de chargement, le composant logique (36) de manière telle que l'adresse, sur le bus d'adresses, est transformée en une valeur d'adresse sous laquelle le programme de commande de chargement (86) est stocké et
- le microprocesseur (10), après l'exécution du programme de commande de chargement (86), désactive le composant logique (36) pour ne plus modifier les adresses sur le bus d'adresses (16).

10. Système radio mobile comportant une station de service qui est en contact radio avec au moins une station radio mobile via des unités de commutation interposées et qui échange des données numériques avec celle-ci, la station radio mobile comprenant les dispositifs suivants :
- un microprocesseur (10) pour commander la station radio et la communication de données ;
- une mémoire non volatile (18) ;
- un dispositif (24) au moyen duquel la mémoire non volatile (18) peut être effacée et réécrite électriquement ;
- dans une première section de mémoire (20) de la mémoire non volatile (18) étant stocké un programme de commande (84, 90) que le microprocesseur (10) doit exécuter pour commander la station radio, le programme de commande (84, 90) commençant à une adresse (adresse de départ) que le microprocesseur (10) active après un départ ou un nouveau départ de la station radio mobile ;
- une deuxième section de mémoire (22) contenant un programme de commande de chargement (86, 86') qui doit être exécuté par le microprocesseur (10) lorsqu'un nouveau programme de commande doit être chargé par voie hertzienne dans la mémoire non volatile (18) ;
**caractérisé en ce que**
le microprocesseur (10), en présence d'un ordre de chargement :
- efface la première section de mémoire (20) de la mémoire non volatile (18) ;
- charge le programme de commande de chargement (86, 86') au début de la première section de mémoire (20) de la mémoire non volatile (18) ;
- exécute le programme de commande de chargement (86, 86').

11. Système radio mobile selon la revendication 9 ou 10, **caractérisé en ce que** la mémoire non volatile est préférentiellement une mémoire E2pROM ou une mémoire flash PROM.

12. Procédé pour exploiter un système radio mobile, dans lequel une station de service est en contact radio avec au moins une station radio mobile via des unités de commutation interposées et échange des données numériques avec celle-ci, la station radio mobile comprenant les dispositifs suivants :
- un microprocesseur (10) pour commander la station radio et la communication de données ;
- une mémoire non volatile (18) ;
- un bus d'adresses (16) via lequel la mémoire non volatile (18) et le microprocesseur (10) sont reliés entre eux ;
- un dispositif (24) au moyen duquel la mémoire non volatile (18) peut être effacée et réécrite électriquement ;
- le microprocesseur (10) exécutant un programme de commande (84, 90) pour faire fonctionner la station radio mobile, lequel programme est stocké dans une première section de mémoire (20) de la mémoire non volatile (18), le programme de commande (84, 90) commençant à une adresse (adresse de départ) que le microprocesseur (10) active via le bus d'adresses (16) après un départ ou un nouveau départ de la station radio mobile ;
- le microprocesseur (10) exécutant un programme de commande de chargement (86, 86') pour charger un nouveau programme de commande, lequel est stocké dans une deuxième section de mémoire (22) de la mémoire non volatile (18),
**caractérisé en ce que** :
le microprocesseur (10), en présence d'un ordre de chargement :
- efface la première section de mémoire (20) de la mémoire non volatile (18) ;
- charge le programme de commande de chargement (86, 86') au début de la première section de mémoire (20) de la mémoire non volatile (18) ;
- exécute le programme de commande de chargement (86, 86').
